# EUROPEAN PATENT APPLICATION

(11) **EP 4 693 991 A1**
(43) Date of publication of application: **11.02.2026**
(21) Application number: 23931455.2
(22) Date of filing: 06.04.2023
(51) Int. Cl.: H04L 5/00, H04W 48/16

(54) **ACCESS CONTROL METHODS, SYSTEM AND APPARATUSES, COMMUNICATION DEVICE, AND STORAGE MEDIUM**

(71) Applicant: Beijing Xiaomi Mobile Software Co., Ltd., Beijing 100085 (CN)
(72) Inventor: QIAO, Xuemei, Beijing 100085 (CN); LI, Yanhua, Beijing 100085 (CN); YOUNG, Gordon Peter, Beijing 100085 (CN)
(74) Representative: Gunzelmann, Rainer
(86) International application number: PCT/CN2023/086745
(87) International publication number: WO 2024/207387

(57) **Abstract**

Provided in the embodiments of the present disclosure are access control methods, system and an apparatuses, a communication device, and a storage medium. An access control method is executed by a terminal, and the method comprises: receiving indication information, the term "terminal" comprising a first-type terminal or a second-type terminal, the indication information being used for determining whether to allow the first-type terminal and/or the second-type terminal to access a target cell, and reduced capability modes of the first-type terminal and the second-type terminal being different from each other; and, on the basis of the indication information and the type of the terminal, determining whether to access the target cell.

## Description

### FIELD

The present disclosure relates to, but is not limited to, the field of wireless communication technology, and in particular relates to an access control method, system and apparatus, a communication device, and a storage medium.

### BACKGROUND

Since there are many different types of terminals, for example, for reduced capability (RedCap) terminals, different terminals may have different capability reduction manners, and the current access control scheme for different terminals cannot effectively distinguish specific terminals, resulting in insufficient flexibility in access control of the terminals.

### SUMMARY

Embodiments of the present disclosure provide an access control method, system and apparatus, a communication device, and a storage medium.

According to a first aspect of embodiments of the present disclosure, there is provided an access control method, which is performed by a terminal and includes:
receiving indication information, in which the terminal includes a first type of terminal or a second type of terminal, the indication information is used to determine whether to allow the first type of terminal and/or the second type of terminal to access a target cell, and a capability reduction manner of the first type of terminal differs from a capability reduction manner of the second type of terminal; and
determining whether to access the target cell based on the indication information and a type of the terminal.

According to a second aspect of embodiments of the present disclosure, there is provided an access control method, which is performed by a network device and includes:
transmitting indication information to a terminal, the terminal including a first type of terminal or a second type of terminal,
in which the indication information is used to determine whether to allow the first type of terminal and/or the second type of terminal to access a target cell, and a capability reduction manner of the first type of terminal differs from a capability reduction manner of the second type of terminal.

According to a third aspect of embodiments of the present disclosure there is provided an access control method, which is performed by an access control system including a terminal and a network device and includes:
transmitting, by the network device, indication information to the terminal; and
receiving, by the terminal, the indication information, and determining whether to access a target cell based on the indication information and a type of the terminal, in which the terminal includes a first type of terminal or a second type of terminal, the indication information is used to determine whether to allow the first type of terminal and/or the second type of terminal to access the target cell, and a capability reduction manner of the first type of terminal differs from a capability reduction manner of the second type of terminal.

According to a fourth aspect of embodiments of the present disclosure there is provided an access control system including:
a terminal configured to perform the method of the first aspect; and
a network device configured to perform the method of the second aspect.

According to a fifth aspect of embodiments of the present disclosure, there is provided an access control apparatus, which is applied to a terminal and includes:
a processing module configured to receive indication information, in which the terminal includes a first type of terminal or a second type of terminal, the indication information is used to determine whether to allow the first type of terminal and/or the second type of terminal to access a target cell, and a capability reduction manner of the first type of terminal differs from a capability reduction manner of the second type of terminal; and determine whether to access the target cell based on the indication information and a type of the terminal.

According to a sixth aspect of embodiments of the present disclosure there is provided an access control apparatus, which is applied to a network device and includes:
a processing module configured to transmit indication information to a terminal, in which the terminal includes a first type of terminal or a second type of terminal, the indication information is used to determine whether to allow the first type of terminal and/or the second type of terminal to access a target cell, and a capability reduction manner of the first type of terminal differs from a capability reduction manner of the second type of terminal.

According to a seventh aspect of embodiments of the present disclosure there is provided a communication device including: a processor, a transceiver, a memory and an executable program stored in the memory and capable of being run by the processor, in which the processor runs the executable program to perform the access control method according to any of the embodiments described above.

According to an eighth aspect of embodiments of the present disclosure there is provided a computer storage medium storing an executable program, in which the processor executes the executable program to implement the access control method according to any of the embodiments described above.

The access control method provided in embodiments of the present disclosure is performed by the terminal and includes: receiving indication information, in which the terminal includes a first type of terminal or a second type of terminal, the indication information is used to determine whether to allow the first type of terminal and/or the second type of terminal to access a target cell, and a capability reduction manner of the first type of terminal differs from a capability reduction manner of the second type of terminal; and determining whether to access the target cell based on the indication information and a type of the terminal. Thus, for terminals having different capability reduction manners, it is possible to distinguish and indicate whether different types of terminals are allowed to access the target cell by the indication information, so that different types of terminals can quickly and accurately determine whether to access the target cell, reducing the time delay of terminals accessing the target cell, and improving the accuracy and flexibility of access control for a plurality of types of terminals.

It should be understood that, the forgoing general description and the following detailed description are only illustrative and explanatory, and cannot limit embodiments of the present disclosure.

### BRIEF DESCRIPTION OF THE DRAWINGS

The accompanying drawings herein are incorporated into the specification and constitute a part of the specification. Theses accompanying drawings illustrate embodiments conforming to the present disclosure and are used to explain the principles of embodiments of the present disclosure together with the specification.
FIG. 1 is a schematic diagram of a wireless communication system illustrated according to an illustrative embodiment.
FIG. 2 is a flow chart of an access control method illustrated according to an illustrative embodiment.
FIG. 3 is a flow chart of an access control method illustrated according to an illustrative embodiment.
FIG. 4 is a flow chart of an access control method illustrated according to an illustrative embodiment.
FIG. 5 is a flow chart of an access control method illustrated according to an illustrative embodiment.
FIG. 6 is a flow chart of an access control method illustrated according to an illustrative embodiment.
FIG. 7 is an interaction diagram of an access control method illustrated according to an illustrative embodiment.
FIG. 8 is a block diagram of an access control apparatus illustrated according to an illustrative embodiment.
FIG. 9 is a block diagram of an access control apparatus illustrated according to an illustrative embodiment.
FIG. 10 is a block diagram of a terminal illustrated according to an illustrative embodiment.
FIG. 11 is a block diagram of a communication device illustrated according to an illustrative embodiment.

### DETAILED DESCRIPTION

Illustrative embodiments will be illustrated in detail herein, and the examples thereof are illustrated in the accompanying drawings. When the following description refers to the accompanying drawings, unless otherwise specified, the same or similar elements are denoted by the same numerals in the different accompanying drawings. Implementations described in the illustrative embodiments do not represent all implementations consistent with embodiments of the present disclosure. On the contrary, they are merely examples of a device and a method consistent with some aspects of embodiments of the present disclosure.

The terms used in embodiments of the present disclosure are only for purpose of description of particular embodiments, and are not intended to limit embodiments of the present disclosure. The singular form ""a", "the" " and "this" used in the present disclosure is also intended to include the plural form, unless other meanings are explicitly expressed in the context. It should be understood that, the term "and/or" used herein refers to and include any or all of the possible combinations of one or a plurality of listed related items.

It should be understood that, although the terms "first", "second", "third" may be employed by embodiments of the present disclosure to describe various information, these information should not limited by these terms. These terms are only used to distinguish the information of the same type from each other. For example, first information may be referred to as second information without departing from the scope of embodiments of the present disclosure, and similarly, the second information may also be referred to as the first information. Depending on the context, the word "if" used herein may be interpreted as "when...", "upon..." or "in response to determining...".

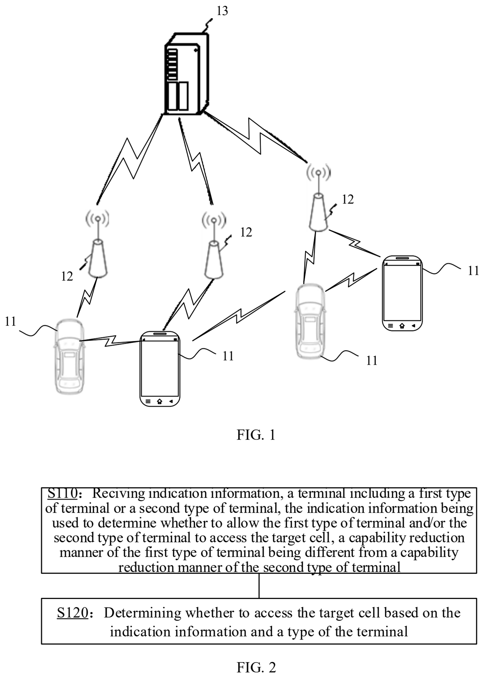

As illustrated in FIG. 1, which is a schematic diagram of a wireless communication system provided by an embodiment of the present disclosure. As illustrated in FIG. 1, the wireless communication system is a communication system based on cellular mobile communication technology, and the wireless communication system may include: a plurality of terminals 11 and a plurality of access devices 12.

The terminal 11 may be a device that provides voice and/or data connectivity to a user. The terminal 11 may communicate with one or more core networks via a radio access network (RAN), and the terminal 11 may be an IoT terminal, such as a sensor device, a mobile phone (or a cellular phone), and a computer having an IoT terminal, which may be, for example, a stationary, portable, pocket-sized, hand-held, computer-built, or vehicle-mounted device. For example, a station (STA), subscriber unit, subscriber station, mobile station, mobile, remote station, access point, remote terminal, access terminal, user device, user agent, user equipment (UE), or user terminal. Or the terminal 11 may be a device for an unmanned aerial vehicle. Or the terminal 11 may be an vehicle-mounted device, e.g., it may be a vehicle computer with wireless communication capabilities, or a wireless communication device that is external to the vehicle computer. Or the terminal 11 may also be a roadside device, e.g., it may be a street light, a signal light, or other roadside devices, etc., with wireless communication capabilities.

The access device 12 may be a network node device in a wireless communication system. The wireless communication system may be the 4th generation mobile communication (4G) system, also known as a long term evolution (LTE) system; or the wireless communication system may be a 5G system, also known as a new radio (NR) system or a 5G NR system. Or the wireless communication system may be a further next-generation system of the 5G system. The access network in the 5G system can be referred to as a New Generation-Radio Access Network (NG-RAN). Or the wireless communication system may be a machine type communication (MTC) system.

The access device 12 may be an evolved access device (eNB) used in the 4G system. Or the access device 12 may be an access device (gNB) with a centralized distributed architecture in the 5G system. When the access device 12 has a centralized distributed architecture, it typically includes a centralized unit (CU) and at least two distributed units (DUs). The centralized unit is provided with protocol stacks for packet data convergence protocol (PDCP) layer, radio link control (RLC) layer, and media access control (MAC) layer; the distributed unit is provided with a physical (PHY) layer protocol stack, and embodiments of the present disclosure do not limit the specific implementation of the access device 12.

A wireless connection may be established between the access device 12 and the terminal 11 via a radio air interface. In various implementations, the radio air interface is a radio air interface based on a fourth generation mobile communication network technology (4G) standard; or the radio air interface is a radio air interface based on a fifth generation mobile communication network technology (5G) standard, such as the radio air interface is a new radio; or the radio air interface may be a radio air interface based on a further next generation mobile communication network technology standard based on 5G.

Optionally, the wireless communication system described above may further include a network management device 13. The plurality of access devices 12 are each connected to the network management device 13. The network management device 13 may be a core network device in the wireless communication system. For example, the network management device 13 may be a mobility management entity (MME) in an evolved packet core (EPC) network. Or the network management device may be other core network devices, such as a serving gateway (SGW), a public data network gateway (PGW), a policy and charging rules function (PCRF), a home subscriber server (HSS), or the like. The embodiments of the present disclosure do not limit the implementation form of the network management device 13.

By way of example, the terminal 11 may be a terminal in embodiments of the present disclosure, for example, the terminal may be a UE, and the UE may include, but is not limited to, a mobile phone, a wearable device, a vehicle-mounted terminal, a road side unit (RSU), a smart home terminal, an industrial sensing device, and/or a medical device, and the like. The access device 12 may be a network device in embodiments of the present disclosure, such as a base station.

As illustrated in FIG. 2, embodiments of the present disclosure provide an access control method, which is performed by a terminal and includes the followings.

In S110: indication information is received, in which the terminal includes a first type of terminal or a second type of terminal, the indication information is used to determine whether to allow the first type of terminal and/or the second type of terminal to access a target cell, and a capability reduction manner of the first type of terminal differs from a capability reduction manner of the second type of terminal.

In S120: it is determined whether to access the target cell based on the indication information and a type of the terminal.

In embodiments of the present disclosure, the terminal may be a reduced capability (RedCap) terminal, or may be an enhanced reduced capability (eRedCap) terminal. The capability reduction manner of the first type of terminal and the second type of terminal may refer to a capability reduction manner of the first type of terminal and the second type of terminal compared to a non-RedCap terminal or an ordinary terminal, for example, a peak data rate is reduced compared to a non-RedCap terminal, a baseband bandwidth for data channel is reduced compared to a non-RedCap terminal, or the like. The indication information may be cell access indication information, for example, a cell bar or the like. The indication information may include one or more indication fields, and the indication field corresponding to the first type of terminal may be the same as or different from the second type of terminal.

In an embodiment, the first type of terminal may support a reduced peak data rate (PR), in which the PR may be used for the terminal to reduce the peak data rate based on a relaxation constraint coefficient or the like, for example, the peak data rate may be reduced compared to a non-RedCap terminal, and the PR may correspond to characteristics such as PR1 and PR2. By way of example, the first type of terminal may be an eRedCap terminal that supports only the reduced peak data rate, for example, the first type of terminal may be an eRedCap terminal that supports only PR1 characteristics (PR1 only).

In an embodiment, the second type of terminal may support the reduced peak data rate and a baseband bandwidth reduction for data channel (BW), in which the BW may be used for the terminal to reduce the baseband bandwidth for data channel in scenarios such as different baseband bandwidths and/or radio frequency bandwidths, for example, it may reduce the baseband bandwidth for data channel compared to a non-RedCap terminal, and the BW may correspond to characteristics such as BW1, BW2, or BW3. By way of example, the second type of terminal may be an eRedCap terminal that supports both the reduced peak data rate and the baseband bandwidth reduction for data channel, for example, the second type of terminal may be a terminal that supports both BW3 or PR3 and PR1 (BW3/PR3+PR1) characteristics, and the capability reduction manner corresponding to PR3 is the same as the capability reduction manner of BW3.

In an embodiment, the capability reduction manner corresponding to PR1 may include relaxing a constraint coefficient of 4 or more on the product of the capability parameters v, Q, and f of the terminal, for example, relaxing the constraint coefficient to 1 or 0.75, where, v indicates the maximum number of multiple-in multiple-out (MIMO) layers supported by the terminal, Q indicates the maximum modulation order of the terminal, and f is a conversion coefficient. Optionally, the product of v, Q, and f is positively correlated with the data rate, i.e., the larger the product of v, Q, and f, the higher the data rate.

In an embodiment, the capability reduction manner corresponding to BW3 or PR3 may include setting the maximum number of radio bearers (RBs) for baseband processing of a physical downlink shared channel (PDSCH) or a physical uplink shared channel (PUSCH) to 25 or 12, for example, 25 RBs under a sub-carrierspace (SCS) of 15 kHz, and 12 RBs under an SCS of 30 kHz.

In the embodiments described above, PR, BW, PR1, PR3, BW3, etc. are concepts related to capability reduction mentioned in the discussion of the meeting on standards, and the names and forms thereof are not particularly limited here.

It should be understood that, in some embodiments, the peak rate or peak data rate may be understood as the max data rate in the related art, or may be determined by other means than the max data rate.

In some embodiments, the indication information includes one or more indication fields. When two indication fields are included, a first field and a second field may be included, or when one indication field is included, a third field may be included.

In an embodiment, when the indication field includes a first field and a second field, the first field may be used to determine whether to allow the first type of terminal to access the target cell, and the second field may be used to determine whether to allow the second type of terminal to access the target cell. For example, for the first type of terminal, the first field may be cell bar1, and for the second type of terminal, the second field may be cell bar2, or the like.

Here, the indication information may be indicated differently by two fields.

In an embodiment, each field may be differently indicated by a different value, for example, the field may be "0", "1", "barred", "notbarred", or the field is not configured, etc. "0" and "barred" may indicate the same content, and "1" and "notbarred" may indicate the same content. For example, when the first field is "0" or "barred", it indicates that the first type of terminal is not allowed to access the target cell; and when the first field is "1" or "notbarred", it indicates that the first type of terminal is allowed to access the target cell or the like.

Similarly, when the second field is "0" or "barred", it indicates that the second type of terminal is not allowed to access the target cell; and when the second field is "1" or "notbarred", it indicates that the second type of terminal is allowed to access the target cell or the like.

In an embodiment, in a case where the second field indicates that the second type of terminal is allowed to access the target cell, the first field indicates that the first type of terminal is allowed to access the target cell. Here, it may mean that it is not supported to allow access of only the second type of terminal and not to allow access of the first type of terminal. For example, in a case where the second type of terminal is allowed to access the target cell, the first type of terminal should also be allowed to access the target cell.

By way of example, when the second field is "1", the first field must be "1", not "0" or not configured, etc.

By way of example, when the indication information is {first field, second field}, and the indication information is {1, 0} or {notBarred, barred}, it indicates that the first type of terminal is allowed to access the target cell but the second type of terminal is not allowed to access the target cell. When the indication information is {0, 0}, it indicates that the first type of terminal and the second type of terminal are not allowed to access the target cell. When the indication information is {1, 1}, it indicates that the first type of terminal and the second type of terminal are allowed to access the target cell, or it indicates that only the second type of terminal is allowed to access the target cell. The indication information is not allowed to be {0, 1} or {not configured, 1}, or {0, 1} is treated as a reserved field.

In an embodiment, when the indication information includes a first field and a second field, the indication information includes at least one of:
in a case where the first field and the second field are both a first value, indicating that the second type of terminal is allowed to access the target cell, or indicating that the first type of terminal and the second type of terminal are allowed to access the target cell;
in a case where the first field is a second value or is not configured, indicating that the first type of terminal and the second type of terminal are not allowed to access the target cell; or
in a case where the first field is a first value and the second field is a second value or is not configured, indicating that the first type of terminal is allowed to access the target cell, and the second type of terminal is not allowed to access the target cell.

Here, the first value may be "1", "not barred", or the like, and the second value may be "0", "barred", or the like.

In an embodiment, in a case where the first field is a second value or is not configured, the second field is not a first value; or in a case where the first field is a second value or is not configured and the second field is a first value, the indication information is used to indicate that all types of terminals are not allowed to access the target cell; or in a case where the first field is a second value or is not configured and the second field is a first value, the indication information is a reserved field.

Here, in a case where the first field is the second value or is not configured, the second field is not the first value, which may mean that it is not supported to allow access of only the second type of terminal and not to allow access of the first type of terminal. For example, in a case where the second type of terminal is allowed to access the target cell, the first type of terminal should also be allowed to access the target cell.

By way of example, the indication information is {first field, second field}, and when the indication information is {1, 1}, it indicates that the second type of terminal is allowed to access the target cell, or the first type of terminal (PR1 only terminal) and the second type of terminal (BW3+PR1 terminal) are allowed to access the target cell. When the indication information is {1, 0}, it indicates that the first type of terminal is allowed to access the target cell, but the second type of terminal is not allowed to access the target cell. When the indication information is {0, 0}, it indicates that the first type of terminal and the second type of terminal are not allowed to access the target cell. The indication information is not allowed to be {0, 1}, or when the indication information is {0, 1}, it is used as a reserved field or indicates that all types of eRedCap terminals are not allowed to access the target cell.

In an embodiment, when the indication information includes a first field and a second field,
step S120 may include: reading a first field, in which the first field indicates whether to allow the first type of terminal to access the target cell; and in a case where the first field is a first value, determining to access the target cell in response to the terminal being the first type of terminal, or reading a second field in response to the terminal being the second type of terminal, and in a case where the second field is the first value, determining to access the target cell.

In an embodiment, the method also includes:
in a case where the first field is a second value or is not configured, determining that the first type of terminal and the second type of terminal do not access the target cell; or
in a case where the second field is a second value or is not configured, determining that the second type of terminal does not access to the target cell; or
in a case where the first field is a first value and the second field is a first value, determining that the first type of terminal does not access the target cell.

Here, by way of example, by means of phased indication, when the first field is "0" or not configured, it indicates that all types of eRedCap terminals are not allowed to access the target cell, and the terminal can determine whether to prohibit all types of terminals from accessing through the first field, and if so, it is not necessary to read the second field.

By way of example, when the first field is "1", the first type of terminal may determine to access the target cell, or the first type of terminal may continue to read the second field, and when the second field is "1", determine not to access the target cell, or when the second field is "0" or not configured, determine to access the target cell. When the first field is "1", the second type of terminal may continue to read the second field for further determination, and when the second field is "1", determine to access the target cell, or when the second field is "0", determine not to access the target cell.

In an embodiment, when the indication information includes a third field, the indication information is used to perform at least one of:
in a case where the third field is not configured, indicating that the first type of terminal and the second type of terminal are not allowed to access the target cell;
in a case where the third field is a first value, indicating that the second type of terminal is allowed to access the target cell, or indicating that the first type of terminal and the second type of terminal are allowed to access the target cell; or
in a case where the third field is a second value, indicating that the first type of terminal is allowed to access the target cell, and the second type of terminal is not allowed to access the target cell.

Here, the indication information may be differently indicated by only one field. The third field is indicated differently by three values: the third field is not configured, the third field is "1", and the third field is "0".

By way of example, in a case where the third field is not configured, it indicates that the first type of terminal and the second type of terminal are not allowed to access the target cell. In a case where the third field is "1", it indicates that the second type of terminal or both the second type of terminal and the first type of terminal are allowed to access the target cell. In a case where the third field is "0", it indicates that the first type of terminal is allowed to access the target cell, and the second type of terminal is not allowed to access the target cell.

In an embodiment, when the indication information includes a third field, the indication information is used to perform at least one of:
in a case where the third field is a first value, indicating that the first type of terminal and the second type of terminal are allowed to access the target cell; or
in a case where the third field is a second value or is not configured, indicating that the first type of terminal and the second type of terminal are not allowed to access the target cell.

Here, the indication information may be differently indicated by only one field. The third field indicates the first type of terminal and the second type of terminal together by two values.

By way of example, in a case where the third field is "1", it indicates that the first type of terminal and the second type of terminal are allowed to access the target cell. In a case where the third field is "0" or not configured, it indicates that the first type of terminal and the second type of terminal are not allowed to access the target cell.

In an embodiment, the first field and the second field are carried by a same signaling or different signalings.

The indication information is carried by at least one of: a master information block (MIB); a system information block 1 (SIB1); downlink control information (DCI) corresponding to the SIB1; other system information (OSI); or DCI corresponding to the OSI.

By way of example, when the indication information includes the first field and the second field, the first field and the second field may be carried by the MIB at the same time, or the first field may be carried by the MIB, and the second field may be carried by the SIB1, or the like.

In an embodiment, the third field is carried by at least one of the MIB, the SIB1, the DCI corresponding to the SIB1, the OSI, and the DCI corresponding to the OSI.

In an embodiment, the method may also include:
receiving an intra frequency resection indication (IFRI); and determining whether to perform intra frequency neighbor cell reselection based on the IFRI in a case where it is determined not to access the target cell.

Different IFRI may be used to separately indicate terminals with different capability reduction manners, and for example, the IFRI used to indicate the first type of terminal may be different from the IFRI used to indicate the second type of terminal.

In an embodiment, the indication information and the IFRI are received, in which the indication information may include a first field and a second field, and the IFRI may include a first IFRI and/or a second IFRI. The first IFRI is used to indicate a first type of terminal, and the second IFRI is used to indicate a second type of terminal.

By way of example, when the first type of terminal determines that the first type of terminal is not allowed to access the target cell based on the first field and/or the second field, the first type of terminal may read the first IFRI and determine whether to perform the intra frequency neighbor cell reselection based on the first IFRI. Similarly, when the second type of terminal determines that the second type of terminal is not allowed to access the target cell based on the first field and/or the second field, the second type of terminal may read the second IFRI and determine whether to perform the intra frequency neighbor cell reselection based on the second IFRI.

In an embodiment, the indication information and the IFRI are received, in which the indication information may include a third field, and the IFRI may include a first IFRI and/or a second IFRI. The first IFRI is used to indicate a first type of terminal, and the second IFRI is used to indicate a second type of terminal.

By way of example, when the first type of terminal determines that the first type of terminal is not allowed to access the target cell based on the third field, the first type of terminal may read the first IFRI and determine whether to perform the intra frequency neighbor cell reselection based on the first IFRI. Similarly, when the second type of terminal determines that the second type of terminal is not allowed to access the target cell based on the third field, the second type of terminal may read the second IFRI and determine whether to perform the intra frequency neighbor cell reselection based on the second IFRI.

In an embodiment, the terminal may have a single receive antenna or dual receive antennas, and the terminal having the single receive antenna and the terminal having the dual receive antennas are indicated by different cell access indication information and/or IFRI. For example, the terminal having the single receive antenna and the terminal having the dual receive antennas are indicated by different indication information, and/or the terminal having the single receive antenna and the terminal having the dual receive antennas are indicated by different IFRI.

For example, the first type of terminal may have the single receive antenna or dual receive antennas, and the second type of terminal may also have the single receive antenna or dual receive antennas, thus the first type of terminal having the single receive antenna, the first type of terminal having the dual receive antennas, the second type of terminal having the single receive antenna, and the second type of terminal having the dual receive antennas may be separately indicated by different indication information, or may be partially or completely indicated by a same indication information, and/or may be separately indicated by different IFRI, or may be partially or completely indicated by a same IFRI.

In an embodiment, the terminal is a half-duplex terminal or a full-duplex terminal, and the half-duplex terminal and the full-duplex terminal are indicated by different indication information and/or IFRI. For example, the half-duplex terminal and the full-duplex terminal are indicated by different indication information, and/or the half-duplex terminal and the full-duplex terminal are indicated by different IFRI.

For example, the first type of terminal may be the half-duplex terminal or the full-duplex terminal, and the second type of terminal may also be half-duplex terminal or the full-duplex terminal, thus the half-duplex first type of terminal, the full-duplex first type of terminal, the half-duplex second type of terminal, and the full-duplex second type of terminal may be separately indicated by different indication information, or may be partially or completely indicated by a same indication information, and/or may be separately indicated by different IFRI, or may be partially or completely indicated by a same IFRI.

In an embodiment, the indication information and the IFRI are carried by a same signaling or different signalings. For example, when the indication information includes the first field and the second field, the first field and the second field as well as part or all of the IFRI may be carried by the same signaling, or may be separately carried by different signalings.

In an embodiment, the IFRI is carried by at least one of: a MIB; a SIB1; DCI corresponding to the SIB1; OSI; DCI corresponding to the OSI.

In an embodiment, the terminal is a terminal supporting a publicly released version Rel-18, and the method further includes: receiving a fourth field and/or a fifth field, in which the fourth field indicates whether to allow a reduced capability (RedCap) terminal supporting Rel-17 to access the target cell, and the fifth field indicates whether to allow a non-RedCap terminal to access the target cell.

The step S120 may include: in a case where the fourth field and/or the fifth field is a first value, determining whether to access the target cell based on the indication information and the type of the terminal.

Here, the fourth field and/or the fifth field may be carried with the indication information by the same signaling or different signalings. Receiving the fourth field and/or the fifth field may be performed simultaneously or sequentially with step S110, and the execution order may be arbitrarily exchanged. When the fourth field and/or the fifth field indicates that access is allowed, step S120 is executed to determine whether the eRedCap terminal accesses the target cell, so that further filtering can be performed, and when the fourth field or the fifth field indicates that access to the target cell is not allowed, unnecessary reading of indication information can be avoided, and energy consumption can be reduced.

In an embodiment, receiving the fourth field and/or the fifth field may be performed simultaneously or sequentially with receiving the IFRI, and the execution order may be arbitrarily exchanged. The fourth field and/or the fifth field may be carried with the indication information by the same signaling or different signalings.

Thus, for terminals having different capability reduction manners, it is possible to distinguish and indicate whether different types of terminals are allowed to access the target cell by the indication information, so that different types of terminals can quickly and accurately determine whether to access the target cell, reducing the time delay of terminals accessing the target cell, and improving the accuracy and flexibility of access control for a plurality of types of terminals.

In an embodiment, the indication information includes a first field and a second field,
the first field indicates whether to allow the first type of terminal to access the target cell, and the second field indicates whether to allow the second type of terminal to access the target cell.

In an embodiment, in a case where the second field indicates that the second type of terminal is allowed to access the target cell, the first field indicates that the first type of terminal is allowed to access the target cell.

In an embodiment, each field may be differently indicated by a different value, for example, the field may be "0", "1", "barred", "notbarred", or the field is not configured, etc. "0" and "barred" may indicate the same content, and "1" and "notbarred" may indicate the same content. For example, when the first field is "0" or "barred", it indicates that the first type of terminal is not allowed to access the target cell; and when the first field is "1" or "notbarred", it indicates that the first type of terminal is allowed to access the target cell or the like.

Similarly, when the second field is "0" or "barred", it indicates that the second type of terminal is not allowed to access the target cell; and when the second field is "1" or "notbarred", it indicates that the second type of terminal is allowed to access the target cell or the like.

In an embodiment, the indication information does not support to allow access of only the second type of terminal and not to allow access of the first type of terminal. For example, in a case where the second type of terminal is allowed to access the target cell, the first type of terminal should also be allowed to access the target cell.

By way of example, when the second field is "1", the first field must be "1", not "0" or not configured, etc.

By way of example, when the indication information is {first field, second field}, and the indication information is {1, 0}, it indicates that the first type of terminal is allowed to access the target cell but the second type of terminal is not allowed to access the target cell. When the indication information is {0, 0}, it indicates that the first type of terminal and the second type of terminal are not allowed to access the target cell. When the indication information is {1, 1}, it indicates that the first type of terminal and the second type of terminal are allowed to access the target cell. The indication information is not allowed to be {0, 1} or {not configured, 1}.

Thus, the first field and the second field indicate whether the first type of terminal and the second type of terminal are allowed to access the target cell, respectively, so that the specific terminal can more clearly and directly confirm the access permission situation, and it is not supported to allow access of only the second type of terminal but not to allow access of the first type of terminal, so that the first type of terminal will not be unable to access the target cell when the network supports the implementation of the reduced peak date rate.

In an embodiment, the indication information includes a first field and a second field,
and the indication information is used to perform at least one of:
in a case where the first field and the second field are both a first value, indicating that the second type of terminal is allowed to access the target cell, or indicating that the first type of terminal and the second type of terminal are allowed to access the target cell;
in a case where the first field is a second value or is not configured, indicating that the first type of terminal and the second type of terminal are not allowed to access the target cell; or
in a case where the first field is a first value and the second field is a second value or is not configured, indicating that the first type of terminal is allowed to access the target cell.

In an embodiment, in a case where the first field is a second value or is not configured, the second field is not a first value; or in a case where the first field is a second value or is not configured and the second field is a first value, the indication information is used to indicate that all types of terminals are not allowed to access the target cell.

Here, the first value may be "1", "notbarred", or the like, and the second value may be "0", "barred", or the like.

In an embodiment, in a case where the first field is a second value or is not configured, the second field is not a first value; or in a case where the first field is a second value or is not configured and the second field is a first value, the indication information is used to indicate that all types of terminals are not allowed to access the target cell; or in a case where the first field is a second value or is not configured and the second field is a first value, the indication information is a reserved field.

Here, it may mean that it is not supported to allow access of only the second type of terminal and not to allow access of the first type of terminal. For example, in a case where the second type of terminal is allowed to access the target cell, the first type of terminal should also be allowed to access the target cell.

By way of example, when the indication information is {first field, second field}, and the indication information is {1, 1}, it indicates that the first type of terminal and the second type of terminal are allowed to access the target cell. When the indication information is {1, 0}, it indicates that the first type of terminal is allowed to access the target cell. When the indication information is {0, 0}, it indicates that the first type of terminal and the second type of terminal are not allowed to access the target cell. The indication information is not allowed to be {0, 1}, or when the indication information is {0, 1}, it is used as a reserved field or indicates that all types of eRedCap terminals are not allowed to access the target cell.

Thus, the combination of the first field and the second field collectively indicates whether the first type of terminal and the second type of terminal are allowed to access the target cell, and the specific terminal can more clearly and directly confirm the access permission situation, and it is not supported to allow access of only the second type of terminal but not to allow access of the first type of terminal, so that the first type of terminal will not be unable to access the target cell when the network supports the implementation of the reduced peak data rate.

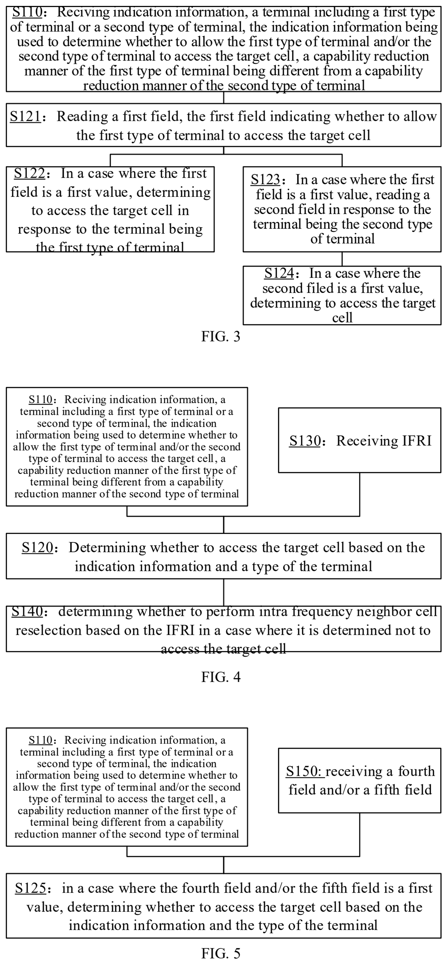

In an embodiment, the indication information includes a first field and a second field,
and as illustrated in FIG. 3, the step S120 may include steps as follows.

In S121: the first field is read, in which the first field indicates whether to allow the first type of terminal to access the target cell.

In S122: in a case where the first field is a first value, it is determined to access the target cell in response to the terminal being the first type of terminal.

In S123: in a case where the first field is a first value, the second field is read in response to the terminal being a second type of terminal.

In S124: in a case where the second field is a first value, it is determined to access to the target cell.

In an embodiment, the method also includes:
in a case where the first field is a second value or is not configured, determining that the first type of terminal and the second type of terminal do not access the target cell; or
in a case where the second field is a second value or is not configured, determining that the second type of terminal does not access to the target cell; or
in a case where the first field is a first value and the second field is a first value, determining that the first type of terminal does not access the target cell.

Here, by way of example, by means of phased indication, when the first field is "0" or not configured, it indicates that all types of eRedCap terminals are not allowed to access the target cell, and the terminal can determine whether to prohibit all types of terminals from accessing through the first field, and if so, it is not necessary to read the second field.

By way of example, when the first field is "1", the first type of terminal may determine to access the target cell, or the first type of terminal may continue to read the second field, and when the second field is "1", determine not to access the target cell, or when the second field is "0" or not configured, determine to access the target cell. When the first field is "1", the second type of terminal may continue to read the second field for further determination, and when the second field is "1", determine to access the target cell, or when the second field is "0", determine not to access the target cell.

Thus, different types of terminals can adopt different reading times according to the content indicated by the field by means of phased indication, and when the first field indicates that the first type of terminal and the second type of terminal are not allowed to access the target cell, it is not necessary to continue reading the second field, reducing unnecessary redundant reading by the terminal, and reducing energy consumption and resource occupation.

In an embodiment, the indication information includes a third field,
and the indication information is used to perform at least one of:
in a case where the third field is not configured, indicating that the first type of terminal and the second type of terminal are not allowed to access the target cell;
in a case where the third field is a first value, indicating that the second type of terminal is allowed to access the target cell, or indicating that the first type of terminal and the second type of terminal are allowed to access the target cell; or
in a case where the third field is a second value, indicating that the first type of terminal is allowed to access the target cell.

By way of example, in a case where the third field is not configured, it indicates that the first type of terminal and the second type of terminal are not allowed to access the target cell. In a case where the third field is "1", it indicates that the second type of terminal or both the second type of terminal and the first type of terminal are allowed to access the target cell. in a case where the third field is "0", it indicates that the first type of terminal is allowed to access the target cell.

In an embodiment, the indication information includes a third field,
and the indication information is used to perform at least one of:
in a case where the third field is a first value, indicating that the first type of terminal and the second type of terminal are allowed to access the target cell; or
in a case where the third field is a second value or is not configured, indicating that the first type of terminal and the second type of terminal are not allowed to access the target cell.

By way of example, in a case where the third field is "1", it indicates that the first type of terminal and the second type of terminal are allowed to access the target cell. In a case where the third field is "0" or not configured, it indicates that the first type of terminal and the second type of terminal are not allowed to access the target cell.

Thus, different values of one field indicate the first type of terminal and the second type of terminal respectively, or indicate the common access permission situation of the first type of terminal and the second type of terminal, so that the data amount of the indication information can be reduced.

In some embodiments, as illustrated in FIG. 4, the method further includes:
In S130: the IFRI is received.
In S140: it is determined whether to perform intra frequency neighbor cell reselection based on the IFRI in a case where it is determined not to access the target cell.

Here, step S130 may be performed simultaneously or sequentially with step S110, and the execution order of steps S130 and S110 may be arbitrarily exchanged, or the order of step S130 and step S120 may be exchanged. The IFRI and the indication information may be carried by the same signaling or different signalings.

In an embodiment, the IFRI used to indicate a first type of terminal is different from the IFRI used to indicate a second type of terminal.

In an embodiment, the terminal has a single receive antenna or dual receive antennas, and the terminal having the single receive antenna and the terminal having the dual receive antennas are indicated by different indication information and/or IFRI. For example, the terminal having the single receive antenna and the terminal having the dual receive antennas are indicated by different indication information, and/or the terminal having the single receive antenna and the terminal having the dual receive antennas are indicated by different IFRI.

In an embodiment, the terminal is a half-duplex terminal or a full-duplex terminal, and the half-duplex terminal and the full-duplex terminal are indicated by different indication information and/or IFRI. For example, the half-duplex terminal and the full-duplex terminal are indicated by different indication information, and/or the half-duplex terminal and the full-duplex terminal are indicated by different IFRI.

Thus, the IFRI can further indicate the cell reselection behavior of the terminal that cannot access the target cell, improving the success rate of the terminal accessing the cell.

In some embodiments, the terminal is a terminal supporting the Rel-18, and as illustrated in FIG. 5, the method further includes the followings.

In S150: the fourth field and/or the fifth field are received.

The fourth field indicates whether to allow a reduced capability (RedCap) terminal supporting Rel-17 to access the target cell, and the fifth field indicates whether to allow a non-RedCap terminal to access the target cell.

The step S120 may include the followings.

In S125: in a case where the fourth field and/or the fifth field is a first value, it is determined whether to access the target cell based on the indication information and the type of the terminal.

Thus, when the fourth field and/or the fifth field indicates that access is allowed, the step of determining whether the eRedCap terminal accesses the target cell is performed, so that further filtering can be performed, and when the fourth field or the fifth field indicates that access to the target cell is not allowed, unnecessary reading of indication information can be avoided, and energy consumption can be reduced.

It should be noted that for the steps in the embodiments corresponding to the embodiment of FIG. 2, reference may be made to the steps corresponding to the embodiment of FIG. 2 and its alternative implementations, and the like, which will not be repeated here.

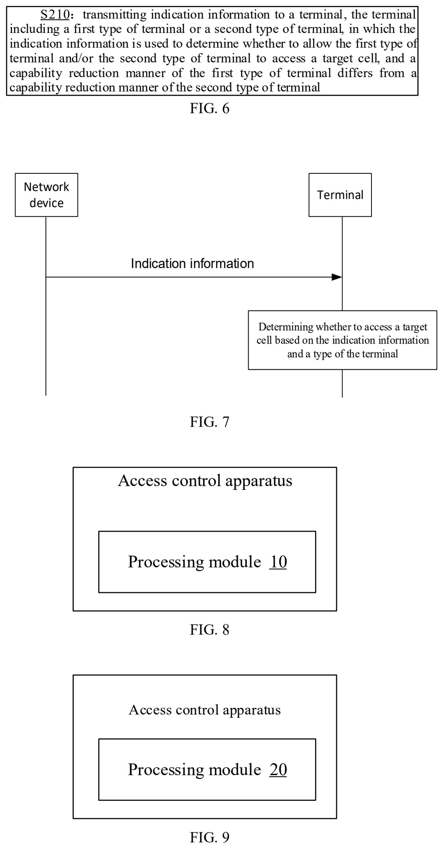

As illustrated in FIG. 6, embodiments of the present disclosure provide an access control method, which is performed by a network device and includes the followings.

In S210: indication information is transmitted to a terminal, in which the terminal includes a first type of terminal or a second type of terminal, the indication information is used to determine whether to allow the first type of terminal and/or the second type of terminal to access a target cell, and a capability reduction manner of the first type of terminal differs from a capability reduction manner of the second type of terminal.

In an embodiment, the first type of terminal only supports a reduced peak data rate, and the second type of terminal supports the reduced peak data rate and a baseband bandwidth reduction for data channel.

In an embodiment, the indication information includes a first field and a second field, or a third field.

In an embodiment, the first field and the second field transmitted may be carried by a same signaling or different signalings.

In an embodiment, the indication information includes a first field and a second field,
the first field indicates whether to allow the first type of terminal to access the target cell, and the second field indicates whether to allow the second type of terminal to access the target cell.

In an embodiment, in a case where the second field indicates that the second type of terminal is allowed to access the target cell, the first field indicates that the first type of terminal is allowed to access the target cell.

In an embodiment, the indication information includes a first field and a second field,
and the indication information is used to perform at least one of:
in a case where the first field and the second field are both a first value, indicating that the second type of terminal is allowed to access the target cell, or indicating that the first type of terminal and the second type of terminal are allowed to access the target cell;
in a case where the first field is a second value or is not configured, indicating that the first type of terminal and the second type of terminal are not allowed to access the target cell; or
in a case where the first field is a first value and the second field is a second value or is not configured, indicating that the first type of terminal is allowed to access the target cell.

In an embodiment, in a case where the first field is a second value or is not configured, the second field is not a first value; or in a case where the first field is a second value or is not configured and the second field is a first value, the indication information is used to indicate that all types of terminals are not allowed to access the target cell.

In an embodiment, the indication information includes a first field and a second field,
the first field indicates whether to allow the first type of terminal to access the target cell; and
the second field indicates whether to allow the second type of terminal to access the target cell, and the second field is configured for the second type of terminal to continue reading after the second type of terminal reads the first field and the first field is a first value.

In an embodiment, the indication information includes a third field,
and the indication information is used to perform at least one of:
in a case where the third field is not configured, indicating that the first type of terminal and the second type of terminal are not allowed to access the target cell;
in a case where the third field is a first value, indicating that the second type of terminal is allowed to access the target cell, or indicating that the first type of terminal and the second type of terminal are allowed to access the target cell; or
in a case where the third field is a second value, indicating that the first type of terminal is allowed to access the target cell.

In an embodiment, the indication information includes a third field,
and the indication information is used to perform at least one of:
in a case where the third field is a first value, indicating that the first type of terminal and the second type of terminal are allowed to access the target cell; or
in a case where the third field is a second value or is not configured, indicating that the first type of terminal and the second type of terminal are not allowed to access the target cell.

In an embodiment, the indication information is carried by at least one of:
a master information block (MIB);
a system information block 1 (SIB1);
downlink control information (DCI) corresponding to the SIB1;
other system information (other SI); or
DCI corresponding to the other SI.

In an embodiment, the method also includes:
transmitting an intra frequency reselection indication (IFRI), in which the IFRI is used to determine whether the terminal performs intra frequency neighbor cell reselection.

In an embodiment, receiving the IFRI may be performed simultaneously or sequentially with receiving the indication information, and the execution order may be arbitrarily exchanged. The IFRI and the indication information may be transmitted by the same signaling or different signalings.

In an embodiment, the first type of terminal and the second type of terminal are indicated by different IFRI.

In an embodiment, the terminal has a single receive antenna or dual receive antennas, and the terminal having the single receive antenna and the terminal having the dual receive antennas are indicated by different indication information and/or IFRI.

In an embodiment, the terminal is a half-duplex terminal or a full-duplex terminal, and the half-duplex terminal and the full-duplex terminal are indicated by different indication information and/or IFRI.

In an embodiment, the indication information and the IFRI are carried by a same signaling or different signalings.

In an embodiment, the IFRI is carried by at least one of:
a master information block (MIB);
a system information block 1 (SIB1);
downlink control information (DCI) corresponding to the SIB1;
other system information (other SI); or
DCI corresponding to the other SI.

In an embodiment, the terminal is a terminal supporting the Rel-18, and the method further includes:
transmitting a fourth field and/or a fifth field, in which the fourth field indicates whether to allow a reduced capability (RedCap) terminal supporting Rel-17 to access the target cell, and the fifth field indicates whether to allow a non-RedCap terminal to access the target cell; and in a case where the fourth field and/or the fifth field is a first value, it is used to instruct the terminal to determine whether to access the target cell based on the indication information and the type of the terminal.

In an embodiment, transmitting the fourth field and/or the fifth field may be performed simultaneously or sequentially with transmitting the indication information, and the execution order may be arbitrarily exchanged. The fourth field and/or the fifth field may be carried with the indication information by the same signaling or different signalings.

In an embodiment, transmitting the fourth field and/or the fifth field may be performed simultaneously or sequentially with transmitting the IFRI, and the execution order may be arbitrarily exchanged. The fourth field and/or the fifth field may be carried with the IFRI by the same signaling or different signalings.

It should be noted that for contents of the embodiment described above that are identical to or corresponding to the terminal side embodiments described above, reference may be made to the steps corresponding to the embodiments of FIGS. 2 to 5 and their alternative implementations, and the like, which will not be repeated here.

As illustrated in FIG. 7, embodiments of the present disclosure provide an access control method, which is performed by an access control system including a terminal and a network device and includes:
transmitting, by the network device, indication information to the terminal; and
receiving, by the terminal, the indication information, and determining whether to access a target cell based on the indication information and a type of the terminal, in which the terminal includes a first type of terminal or a second type of terminal, the indication information is used to determine whether to allow the first type of terminal and/or the second type of terminal to access the target cell, and a capability reduction manner of the first type of terminal differs from a capability reduction manner of the second type of terminal.

It should be noted that for steps performed by the terminal in the present embodiment, reference may be made to the steps and their alternative implementations described in the terminal side embodiments described above, and for steps performed by the network device, reference may be made to the steps and their alternative implementations described in the network device side embodiments described above, which will not be repeated here.

Embodiments of the present disclosure provide an access control method, which may include the followings.

Embodiment 1: Separate cell access indication fields are introduced for PR1 only and BW3/PR3+PR1 terminals.

By way of example, a first field (cell bar 1) indicates a BW3+PR1 terminal, and a second field (cell bar 2) indicates a PR1 only terminal. When cell bar 2 is not configured or indicated as barred, it indicates that the network side does not allow access of the terminal of PR1 only; and when cell bar 1 is not configured or indicated as barred, it indicates that the network side does not allow access of the terminal of BW3+PR1.

Optionally, the network side is not allowed to indicate {0, 1} or {not configured cell bar, 1} for {PR1 only, BW3+PR1}. That is, the network side is not allowed to implement only the BW3+PR1 without implementing the PR1 only.

Embodiment 2: Separate cell access indication fields are introduced for PR1 and BW3 terminals.

By way of example, if {1, 1} indicates {PR1, BW3}, it indicates that the network side only allows the eRedCap terminal supporting PR1+BW3/PR3 functions to access the cell, or it indicates that the network side allows the terminal supporting both PR1+BW3 and PR1 only functions to access the cell; and {1, 0/not configured} for {PR1, BW3} indicates that the network side only allows the eRedCap terminal supporting PR1 only to access the cell; {0/not configured, 0/not configured} indicates that both types of terminals supporting two different functions are not allowed to access the cell.

Optionally, the network side is not allowed to configure the value of {0, 1}, or {0, 1} is indicated as a reserved field, or {0, 1} indicates that all types of Rel-18 RedCap terminals are not allowed to access.

Embodiment 3: for PR1+BW3, phased indication is performed: the terminal first reads the first field (cell bar for PR1), and if it does not exist or is set to 0, it indicates that all eRedCap terminals are not allowed to access; if it is set to 1, it indicates that the PR1 only is allowed to access, and whether to allow the PR1+BW3 terminal to access requires further reading of the second indication field. When the second indication field is set to 1, it indicates that the access of the PR1+BW3 terminal is allowed, and at the same time, it indicates that the access of the PR1 only terminal is allowed or not allowed; and if the second indication field is set to 0 or does not exist, it indicates that the access of the PR1+BW3 terminal is not allowed.

Embodiment 4: a field is used for indication: if not configured, it indicates that neither PR1 only nor BW3/PR3+PR1 is supported; an indication of 0 indicates that PR1 only is supported, and an indication of 1 indicates that both PR1 only and PR1+BW3 are supported, or only PR1+BW3 is supported.

Embodiment 5: a field is used for indication: this field is effective for PR1 only and BW3/PR3+PR1 together. For example, when it is not configured or configured to not allow access, neither of the users is allowed to access; when it is configured to allow access, both types of the users can access the cell.

Optionally, the corresponding IFRI is introduced for the cell bar. Further, separate IFRI may be introduced for different functions. Optionally, the cell bar and/or IFRI indication may be performed respectively for 1RX, 2RX, and half-duplex eRedCap terminals, or the cell bar and/or IFRI indication may be performed collectively for 1RX, 2RX eRedCap terminals.

Optionally, the indication signaling may be MIB, SIB1, DCI corresponding to the SIB1, OSI, DCI corresponding to the OSI, or the like.

Optionally, the IFRI and the cell bar may be carried using the same signaling, or may be carried using different signalings, respectively.

Optionally, the cell bar set for the Rel-17 RedCap terminal in SIB 1 is valid for at least one user capability reduction scheme. For example, the cell bar set for the Rel-17 RedCap terminal in SIB1 is valid for PR1 only. Then, when the cell bar of the Rel-17 RedCap terminal is indicated as notbarred, the Rel-18 RedCap terminal that only supports PR1 needs to further read the cell bar 2, and when the cell bar 2 is not configured or indicated as barred, it indicates that the Rel-18 RedCap user that only supports the PR1 scheme is not allowed to access.

Embodiments of the present disclosure provide an access control system including:
a terminal configured to perform the method of one or more of the technical solutions on the terminal side; and
a network device configured to perform the method of one or more of the technical solutions on the network device side.

In embodiments of the present disclosure, for steps and related contents performed by the terminal, reference may be made to the related contents of the terminal side in the foregoing embodiments, and for steps and related contents performed by the network device, reference may be made to the related contents of the network device side in the foregoing embodiments, which will not be repeated here.

As illustrated in FIG. 8, embodiments of the present disclosure provide an access control apparatus, which is applied to a terminal and includes:
a processing module 10 configured to receive indication information, in which the terminal includes a first type of terminal or a second type of terminal, the indication information is used to determine whether to allow the first type of terminal and/or the second type of terminal to access a target cell, and a capability reduction manner of the first type of terminal differs from a capability reduction manner of the second type of terminal; and determine whether to access the target cell based on the indication information and a type of the terminal.

In an embodiment, the terminal is an enhanced reduced capability (eRedCap) terminal.

In an embodiment, the first type of terminal only supports a reduced peak data rate, and the second type of terminal supports the reduced peak data rate and a baseband bandwidth reduction for data channel.

In an embodiment, the indication information includes a first field and a second field, or a third field.

In an embodiment, the indication information includes a first field and a second field,
the first field is used to determine whether to allow the first type of terminal to access the target cell, and the second field is used to determine whether to allow the second type of terminal to access the target cell.

In an embodiment, in a case where the second field indicates that the second type of terminal is allowed to access the target cell, the first field indicates that the first type of terminal is allowed to access the target cell.

In an embodiment, the indication information includes a first field and a second field,
and the indication information is used to perform at least one of:
in a case where the first field and the second field are both a first value, indicating that the second type of terminal is allowed to access the target cell, or indicating that the first type of terminal and the second type of terminal are allowed to access the target cell;
in a case where the first field is a second value or is not configured, indicating that the first type of terminal and the second type of terminal are not allowed to access the target cell; or
in a case where the first field is a first value and the second field is a second value or is not configured, indicating that the first type of terminal is allowed to access the target cell.

In an embodiment, in a case where the first field is a second value or is not configured, the second field is not a first value; or in a case where the first field is a second value or is not configured and the second field is a first value, the indication information is used to indicate that all types of terminals are not allowed to access the target cell.

In an embodiment, the indication information includes a first field and a second field,
and the processing module 10 is configured to:
read the first field, in which the first field indicates whether to allow the first type of terminal to access the target cell; and
in a case where the first field is a first value, determine to access the target cell in response to the terminal being the first type of terminal, or
read the second field in response to the terminal being a second type of terminal, and
in a case where the second field is a first value, determine to access to the target cell.

In an embodiment, the processing module 10 is further configured to:
in a case where the first field is a second value or is not configured, determine that the first type of terminal and the second type of terminal do not access the target cell; or
in a case where the second field is a second value or is not configured, determine that the second type of terminal does not access to the target cell; or
in a case where the first field is a first value and the second field is a first value, determine that the first type of terminal does not access the target cell.

In an embodiment, the indication information includes a third field,
and the indication information is used to perform at least one of:
in a case where the third field is not configured, indicating that the first type of terminal and the second type of terminal are not allowed to access the target cell;
in a case where the third field is a first value, indicating that the second type of terminal is allowed to access the target cell, or indicating that the first type of terminal and the second type of terminal are allowed to access the target cell;
in a case where the third field is a second value, indicating that the first type of terminal is allowed to access the target cell.

In an embodiment, the indication information includes a third field,
and the indication information is used to perform at least one of:
in a case where the third field is a first value, indicating that the first type of terminal and the second type of terminal are allowed to access the target cell; or
in a case where the third field is a second value or is not configured, indicating that the first type of terminal and the second type of terminal are not allowed to access the target cell.

In an embodiment, the indication information is carried by at least one of:
a master information block (MIB);
a system information block 1 (SIB1);
downlink control information (DCI) corresponding to the SIB1;
other system information (other SI); or
DCI corresponding to the other SI.

In an embodiment, the method also includes:
receiving an intra frequency reselection indication (IFRI); and
determining whether to perform intra frequency neighbor cell reselection based on the IFRI in a case where it is determined not to access the target cell.

In an embodiment, the first type of terminal and the second type of terminal are indicated by different IFRI.

In an embodiment, the terminal has a single receive antenna or dual receive antennas, and the terminal having the single receive antenna and the terminal having the dual receive antennas are indicated by different indication information and/or IFRI.

In an embodiment, the terminal is a half-duplex terminal or a full-duplex terminal, and the half-duplex terminal and the full-duplex terminal are indicated by different indication information and/or IFRI.

In an embodiment, the indication information and the IFRI are carried by a same signaling or different signalings.

In an embodiment, the IFRI is carried by at least one of:
a master information block (MIB);
a system information block 1 (SIB1);
downlink control information (DCI) corresponding to the SIB1;
other system information (other SI); or
DCI corresponding to the other SI.

In an embodiment, the terminal is a terminal supporting the Rel-18, and the processing module 10 is further configured to:
receive a fourth field and/or a fifth field, in which the fourth field indicates whether to allow a reduced capability (RedCap) terminal supporting Rel-17 to access the target cell, and the fifth field indicates whether to allow a non-RedCap terminal to access the target cell.

The processing module 10 is configured to:
in a case where the fourth field and/or the fifth field is a first value, determine whether to access the target cell based on the indication information and the type of the terminal.

It should be noted that the processing module 10 of the access control apparatus may execute the steps and alternative implementations described in the terminal side embodiments described above, such as FIGS. 2 to 5, which will not be repeated here.

As illustrated in FIG. 9, embodiments of the present disclosure provide an access control apparatus, which is applied to a network device and includes:
a processing module 20 configured to transmit indication information to a terminal, in which the terminal includes a first type of terminal or a second type of terminal, the indication information is used to determine whether to allow the first type of terminal and/or the second type of terminal to access a target cell, and a capability reduction manner of the first type of terminal differs from a capability reduction manner of the second type of terminal.

In an embodiment, the first type of terminal only supports a reduced peak data rate, and the second type of terminal supports the reduced peak data rate and a baseband bandwidth reduction for data channel.

In an embodiment, the indication information includes a first field and a second field, or a third field.

In an embodiment, the indication information includes a first field and a second field,
the first field is used to determine whether to allow the first type of terminal to access the target cell, and the second field is used to determine whether to allow the second type of terminal to access the target cell.

In an embodiment, in a case where the second field indicates that the second type of terminal is allowed to access the target cell, the first field indicates that the first type of terminal is allowed to access the target cell.

In an embodiment, the indication information includes a first field and a second field,
and the indication information is used to perform at least one of:
in a case where the first field and the second field are both a first value, indicating that the second type of terminal is allowed to access the target cell, or indicating that the first type of terminal and the second type of terminal are allowed to access the target cell;
in a case where the first field is a second value or is not configured, indicating that the first type of terminal and the second type of terminal are not allowed to access the target cell; or
in a case where the first field is a first value and the second field is a second value or is not configured, indicating that the first type of terminal is allowed to access the target cell.

In an embodiment, in a case where the first field is a second value or is not configured, the second field is not a first value; or in a case where the first field is a second value or is not configured and the second field is a first value, the indication information is used to indicate that all types of terminals are not allowed to access the target cell.

In an embodiment, the indication information includes a first field and a second field,
the first field indicates whether to allow the first type of terminal to access the target cell; and
the second field indicates whether to allow the second type of terminal to access the target cell, and the second field is configured for the second type of terminal to continue reading after the second type of terminal reads the first field and the first field is a first value.

In an embodiment, the indication information includes a third field,
and the indication information is used to perform at least one of:
in a case where the third field is not configured, indicating that the first type of terminal and the second type of terminal are not allowed to access the target cell;
in a case where the third field is a first value, indicating that the second type of terminal is allowed to access the target cell, or indicating that the first type of terminal and the second type of terminal are allowed to access the target cell; or
in a case where the third field is a second value, indicating that the first type of terminal is allowed to access the target cell.

In an embodiment, the indication information includes a third field,
and the indication information is used to perform at least one of:
in a case where the third field is a first value, indicating that the first type of terminal and the second type of terminal are allowed to access the target cell; or
in a case where the third field is a second value or is not configured, indicating that the first type of terminal and the second type of terminal are not allowed to access the target cell.

In an embodiment, the indication information is carried by at least one of:
a master information block (MIB);
a system information block 1 (SIB1);
downlink control information (DCI) corresponding to the SIB1;
other system information (other SI); or
DCI corresponding to the other SI.

In an embodiment, the processing module 20 is further configured to:
transmit an intra frequency reselection indication (IFRI), in which the IFRI is used to determine whether the terminal performs intra frequency neighbor cell reselection.

In an embodiment, the first type of terminal and the second type of terminal are indicated by different IFRI.

In an embodiment, the terminal has a single receive antenna or dual receive antennas, and the terminal having the single receive antenna and the terminal having the dual receive antennas are indicated by different indication information and/or IFRI.

In an embodiment, the terminal is a half-duplex terminal or a full-duplex terminal, and the half-duplex terminal and the full-duplex terminal are indicated by different indication information and/or IFRI.

In an embodiment, the indication information and the IFRI are carried by a same signaling or different signalings.

In an embodiment, the IFRI is carried by at least one of:
a master information block (MIB);
a system information block 1 (SIB1);
downlink control information (DCI) corresponding to the SIB1;
other system information (other SI); or
DCI corresponding to the other SI.

In an embodiment, the terminal is a terminal supporting a publicly released version Rel-18, and the processing module 20 is further configured to:
transmit a fourth field and/or a fifth field, in which the fourth field indicates whether to allow a reduced capability (RedCap) terminal supporting Rel-17 to access the target cell, and the fifth field indicates whether to allow a non-RedCap terminal to access the target cell; and in a case where the fourth field and/or the fifth field is a first value, it is used to instruct the terminal to determine whether to access the target cell based on the indication information and the type of the terminal.

It should be noted that the processing module 20 of the access control apparatus may execute the steps and alternative implementations described in the terminal side embodiments described above, such as FIG. 6, which will not be repeated here.

In the absence of contradictions, each step in a certain embodiment or implementation may be implemented as an independent embodiment, and the steps may be arbitrarily combined, for example, a solution in which some steps are removed in a certain embodiment or implementation can also be implemented as an independent embodiment, and the order of each step in a certain embodiment or implementation may be arbitrarily exchanged, and in addition, optional manners or examples in a certain embodiment or implementation may be arbitrarily combined. In addition, various embodiments or implementations may be arbitrarily combined, for example, some or all steps of different embodiments or implementations may be arbitrarily combined, and one embodiment or implementation may be arbitrarily combined with optional manners or examples of other embodiments or implementations.

Embodiments of the present disclosure provide a communication device including:
a memory configured to store instructions executable by the processor, and
a processor connected to the memory,
in which the processor is configured to perform the access control method provided by any technical solution described above.

The processor may include various types of storage media that are non-transitory computer storage media capable of continuing to memorize the information stored thereon after the communication device is powered down.

Here, the communication device includes a terminal or a network element, and the network element may be any one of the first network element to the fourth network element.

The processor may be connected to the memory via a bus or the like for reading the executable program stored on the memory, e.g., at least one of the methods illustrated in FIGS. 2 to 7.

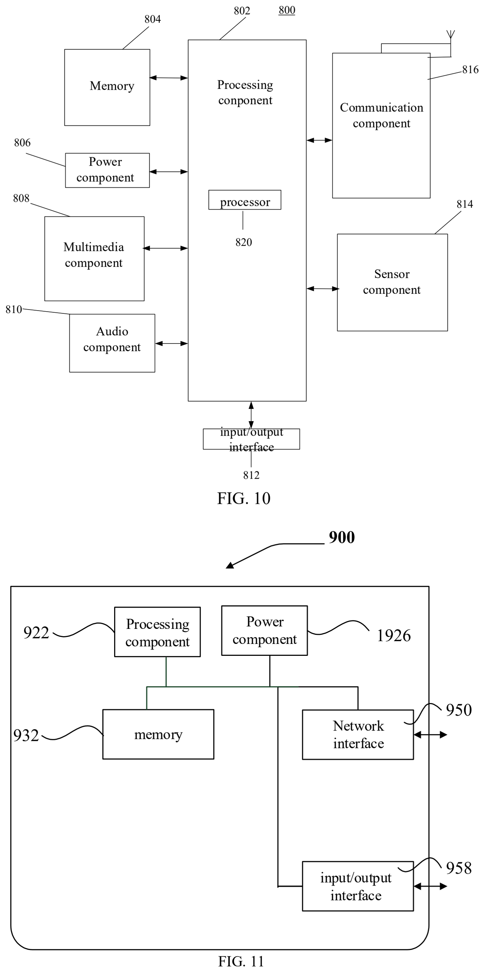

FIG. 10 is a block diagram of a terminal 800 illustrated according to an illustrative embodiment. For example, the terminal 800 may be a mobile phone, a computer, a digital broadcast user equipment, a messaging device, a game console, a tablet device, a medical device, a fitness device, a personal digital assistant, etc.

As illustrated in FIG. 10, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 generally controls overall operation of the terminal 800, such as operations related to display, call, data communication, camera and record. The processing component 802 may include one or a plurality of processors 820 to execute instructions, to generate all or a part of steps of the above-described method. Additionally, the processing component 802 may include one or a plurality of modules, facilitating interaction between the processing component 802 and other components. For example, the processing component 802 may include a multimedia module, facilitating interaction between the multimedia component 808 and the processing component 802.

The memory 804 is configured to store various types of data to support the operations of the terminal 800. Examples of these data include instructions, contact data, telephone book data, messages, pictures, videos, etc. for any application or method operated on the terminal 800. The memory 804 may be realized by any type of volatile, or non-volatile storage devices or combination thereof, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a magnetic or optical disk.

The power component 806 provides power for various components of the terminal 800. The power component 806 may include a power management system, one or a plurality of power sources, and other components associated with generating, managing and distributing power for the terminal 800.

The multimedia component 808 includes a screen providing one output interface between the terminal 800 and the user. In some embodiments, the screen may include a liquid crystal display (LCD), and a touch panel (TP). If the screen includes the touch panel, the screen may be realized as a touch screen, to receive an input signal from the user. The touch panel includes one or a plurality of touch sensors to sense touch, swipe and gesture on the touch panel. The touch sensor not only can sense the boundary of the touch or swipe action, but also can detect duration time and pressure related to the touch or swipe operation. In some embodiments, the multimedia component 808 includes a front camera and/or a rear camera. When the terminal 800 is in an operation mode, such as in a photographing or video mode, the front camera and/or the rear camera can receive external multimedia data. Each of the front camera and the rear camera may be a fixed optical lens system or has a focal length and optical zoom capability.

The audio component 810 is configured to output and/or input an audio signal. For example, the audio component 810 includes a microphone (MIC). The microphone is configured to receive external audio signal when the terminal 800 is in the operation mode, such as in a call mode, a record mode and a speech recognition mode. The received audio signal can be further stored in the memory 804 or transmitted via the communication component 816. In some embodiments, the audio component 810 further includes a speaker configured to output the audio signal.

The input/output (I/O) interface 812 provides interfaces between the processing component 802 and peripheral interface modules, and the forgoing peripheral interface module may be a keyboard, a click wheel, a button, etc. The button may include but not limited to a homepage button, a volume button, a start button and a lock button.

The sensor component 814 includes one or a plurality of sensors configured to provide state assessments of various aspects of the terminal 800. For example, the sensor component 814 may detect on/off state of the terminal 800, relative positioning of components. For example, the components may be a display and a keypad of the terminal 800. The sensor component 814 may further detect positional variation of the terminal 800 or one component of the terminal 800, presence or absence of contact between the user and the terminal 800, orientation or acceleration/deceleration of the terminal 800 and temperature variation of the terminal 800. The sensor component 814 may include a proximity sensor configured to detect presence of nearby objects without any physical contact. The sensor component 814 may also include an optical sensor, such as a COMS or CCD image sensor configured to use in an imaging application. In some embodiments, the sensor component 814 may further include an acceleration sensor, a gyro sensor, a magnetic sensor, a pressure sensor or a temperature sensor.

The communication component 816 is configured to facilitate wired or wireless communication between the terminal 800 and other devices. The terminal 800 may access to wireless network based on communication standard, such as WiFi, 2G, or 3G, or combination thereof. In an illustrative embodiment, the communication component 816 receives a broadcast signal or information related to the broadcast from an external broadcast management system. In an illustrative embodiment, the communication component 816 further includes a near field communication (NFC) module to facilitate short-range communication. For example, the NFC module may be realized based on a radio frequency identification (RFID) technology, an infra-red data association (IrDA) technology, an ultra wide band (UWB) technology, a bluetooth (BT) technology and other technologies.

In an illustrative embodiment, the terminal 800 may be realized by one or a plurality of application specific integrated circuits (ASIC), digital signal processors (DSP), digital signal processing equipments (DSPD), programmable logic devices (PLD), field-programmable gate arrays (FPGA), controllers, microcontrollers, microprocessors or other electronic elements configured to execute the above-described method.

In illustrative embodiments, there is also provided a non-transitory computer-readable storage medium including instructions, such as a memory 804 including instructions, and the instructions is executable by the processor 820 of the terminal 800 to generate the method described above. For example, the non-transitory computer readable storage medium may be ROM, random access memory (RAM), CD-ROM, magnetic tape, floppy disks, and optical data storage devices, among others.

As illustrated in FIG. 11, an embodiment of the present disclosure illustrates a structure of a communication device 900. For example, the communication device 900 may be provided as a network node device. The communication device 900 may be the aforementioned base station.

Referring to FIG. 11, the communication device 900 includes a processing component 922, which further includes one or more processors, and memory resources represented by a memory 932 for storing instructions, such as an application program, that may be executed by the processing component 922. The application program stored in memory 932 may include one or more modules each corresponding to a set of instructions. In addition, the processing component 922 is configured to execute instructions to perform any of the aforementioned methods applied to the base station, such as the at least one of the methods illustrated in FIGS. 2 to 7.

The communication device 900 may also include a power component 926 configured to perform power management of the communication device 900, a wired or wireless network interface 950 configured to connect the communication device 900 to a network, and an input/output (I/O) interface 958. The communication device 900 may operate an operating system based on an operating system stored in the memory 932, such as Windows Server TM, Mac OS XTM, UnixTM, LinuxTM, FreeBSDTM, or the like.

In some embodiments, terms such as "access network device (AN device)", "radio access network device (RAN device)", "base station (BS)", "radio base station", "fixed station" "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell" "carrier", "component carrier", and "bandwidth part (BWP) may be interchangeable with each other.

In some embodiments, terms such as "terminal", "terminal device", "user equipment (UE)", "user terminal", "mobile station (MS)", "mobile terminal (MT)", subscriber station, mobile unit, subscriber unit, wireless unit, remote device, mobile device, wireless device, wireless communication device, remote device, mobile subscriber station, access terminal, mobile subscriber, handset, user agent, mobile client, client, etc. may be interchangeable with each other.

In some embodiments, an access network device, a core network device, or a network device may be interchangeable with a terminal. For example, each embodiment of the present disclosure may be applied to a configuration in which communication between an access network device, a core network device, or a network device and a terminal is interchangeable with communication between a plurality of terminals (for example, it may also be referred to as a device-to-device (D2D), a vehicle-to-everything (V2X), or the like). In this case, the terminal may have all or a part of the functions of the access network device. Further, languages such as "uplink" and "downlink" may be interchangeable with languages corresponding to inter-terminal communication (for example, "side"). For example, an uplink channel, a downlink channel, or the like may be interchangeable with a sidelink channel, and an uplink, a downlink, or the like may be interchangeable with a sidelink.

In some embodiments, the terminal may be interchangeable with an access network device, a core network device, or a network device. In this case, the access network device, the core network device, or the network device may have all or a part of the functions of the terminal.

In some embodiments, the name of information or the like is not limited to the name described in embodiments, and terms such as "information", "message", "signal", "signaling", "report", "configuration", "indication", "instruction", "command", "channel", "parameter", "domain", "field", "symbol", "codebook", "codeword", "bit", "data", "program", and "chip" may be interchangeable with each other.

In some embodiments, "obtaining", "acquring", "getting", "receiving", "transmitting", "bidirectional transmission", "transmitting and/or receiving" may be interchangeable with each other, and may be interpreted as receiving from other subjects, obtaining from a protocol, obtaining by itself, autonomously implementing, and the like.

In some embodiments, terms such as "send", "emit", "report", "issue", "transmit", "bi-directional transmission", "transmit and/or receive" may be interchangeable with each other.

In some embodiments, "predetermined" and "preset" may be interpreted as being specified in advance in a protocol or the like, or may be interpreted as performing a preset operation by a device or the like.

In some embodiments, determining may be interpreted as assessing, deciding, judging, calculating, computing, processing, deriving, investigating, retrieving, looking up, search, inquiry, ascertaining, receiving, transmitting, inputting, outputting, accessing, resolving, selecting, choosing, establishing, comparing, assuming, expecting, considering, broadcasting, notifying, communicating, forwarding, configuring, reconfiguring, allocating, mapping, assigning, etc., which is not limited to this.

In some embodiments, the judging or determination may be made by a value (0 or 1) represented by 1 bit, a true or false value (boolean value) represented by true or false, or a numerical comparison (for example, a comparison with a predetermined value), which is not limited to this.

In some embodiments, terms such as "in response to, " "in response to determining," "in a case where," "upon," "when," "if," "in case," and the like may be interchangeable with each other.

Other embodiments of the present disclosure will readily occur to a person skilled in the art upon consideration of the specification and practice of the invention disclosed herein. The present disclosure is intended to cover any variations, uses, or adaptations of the present disclosure that follow the general principles of the present disclosure and include common knowledge or conventional technical means in the art not disclosed by the present disclosure. The specification and embodiments are to be regarded as illustrative only, with the true scope and spirit of the present disclosure being indicated by the following claims.

It should be understood that the present disclosure is not limited to the precise structures described above and illustrated in the accompanying drawings, and that various modifications and changes may be made without departing from the scope thereof. The scope of the present disclosure is limited only by the scope of the appended claims.

## Claims

1. An access control method, performed by a terminal, comprising:
receiving indication information, wherein the terminal includes a first type of terminal or a second type of terminal, the indication information is used to determine whether to allow the first type of terminal and/or the second type of terminal to access a target cell, and a capability reduction manner of the first type of terminal differs from a capability reduction manner of the second type of terminal; and
determining whether to access the target cell based on the indication information and a type of the terminal.

2. The method according to claim 1, wherein the terminal is an enhanced capability reduced (eRedCap) terminal.

3. The method according to claim 1 or 2, wherein the first type of terminal only supports a reduced peak data rate, and the second type of terminal supports the reduced peak data rate and a baseband bandwidth reduction for data channel.

4. The method according to any one of claims 1 to 3, wherein the indication information comprises: a first field and a second field, or a third field.

5. The method according to claim 4, wherein the indication information comprises: the first field and the second field; and
the first field is used to determine whether to allow the first type of terminal to access the target cell, and the second field is used to determine whether to allow the second type of terminal to access the target cell.

6. The method according to claim 5, wherein in a case where the second field indicates that the second type of terminal is allowed to access the target cell, the first field indicates that the first type of terminal is allowed to access the target cell.

7. The method according to claim 4, wherein the indication information comprises: the first field and the second field; and
the indication information is used to perform at least one of:
in a case where the first field and the second field are both a first value, indicating that the second type of terminal is allowed to access the target cell, or indicating that the first type of terminal and the second type of terminal are allowed to access the target cell;
in a case where the first field is a second value or is not configured, indicating that the first type of terminal and the second type of terminal are not allowed to access the target cell; or
in a case where the first field is a first value and the second field is a second value or is not configured, indicating that the first type of terminal is allowed to access the target cell.

8. The method according to claim 7, wherein in a case where the first field is a second value or is not configured, the second field is not a first value; or in a case where the first field is a second value or is not configured and the second field is a first value, the indication information is used to indicate that all types of terminals are not allowed to access the target cell.

9. The method according to claim 4, wherein the indication information comprises: the first field and the second field; and
determining whether to access the target cell based on the indication information and the type of the terminal comprises:
reading the first field, wherein the first field indicates whether to allow the first type of terminal to access the target cell; and
in a case where the first field is a first value, determining to access the target cell in response to the terminal being the first type of terminal, or
reading the second field in response to the terminal being a second type of terminal, and
in a case where the second field is a first value, determining to access to the target cell.

10. The method according to claim 9, further comprising:
in a case where the first field is a second value or is not configured, determining that the first type of terminal and the second type of terminal do not access the target cell; or
in a case where the second field is a second value or is not configured, determining that the second type of terminal does not access to the target cell; or
in a case where the first field is a first value and the second field is a first value, determining that the first type of terminal does not access the target cell.

11. The method according to claim 4, wherein the indication information comprises: the third field; and
the indication information is used to perform at least one of:
in a case where the third field is not configured, indicating that the first type of terminal and the second type of terminal are not allowed to access the target cell;
in a case where the third field is a first value, indicating that the second type of terminal is allowed to access the target cell, or indicating that the first type of terminal and the second type of terminal are allowed to access the target cell; or
in a case where the third field is a second value, indicating that the first type of terminal is allowed to access the target cell.

12. The method according to claim 4, wherein the indication information comprises: the third field; and
the indication information is used to perform at least one of:
in a case where the third field is a first value, indicating that the first type of terminal and the second type of terminal are allowed to access the target cell; or
in a case where the third field is a second value or is not configured, indicating that the first type of terminal and the second type of terminal are not allowed to access the target cell.

13. The method according to any one of claims 1 to 12, wherein the indication information is carried by at least one of:
a master information block (MIB);
a system information block 1 (SIB1);
downlink control information (DCI) corresponding to the SIB1;
other system information (other SI); or
DCI corresponding to the other SI.

14. The method according to any one of claims 1 to 13, further comprising:
receiving an intra frequency reselection indication (IFRI); and
determining whether to perform intra frequency neighbor cell reselection based on the IFRI in a case where it is determined not to access the target cell.

15. The method according to claim 14, wherein the first type of terminal and the second type of terminal are indicated by different IFRI.

16. The method according to claim 14 or 15, wherein the terminal has a single receive antenna or dual receive antennas, and the terminal having the single receive antenna and the terminal having the dual receive antennas are indicated by different indication information and/or IFRI.

17. The method according to claim 14 or 15, wherein the terminal is a half-duplex terminal or a full-duplex terminal, and the half-duplex terminal and the full-duplex terminal are indicated by different indication information and/or IFRI.

18. The method according to any one of claims 14 to 17, wherein the indication information and the IFRI are carried by a same or different signaling.

19. The method according to any one of claims 14 to 18, wherein the IFRI is carried by at least one of:
a master information block (MIB);
a system information block 1 (SIB1);
downlink control information (DCI) corresponding to the SIB1;
other system information (other SI); or
DCI corresponding to the other SI.

20. The method according to any one of claims 1 to 19, wherein the terminal is a terminal supporting a publicly released version Rel-18, and the method further comprises:
receiving a fourth field and/or a fifth field, wherein the fourth field indicates whether to allow a reduced capability (RedCap) terminal supporting Rel-17 to access the target cell, and the fifth field indicates whether to allow a non-RedCap terminal to access the target cell; and
determining whether to access the target cell based on the indication information and the type of the terminal comprises:
in a case where the fourth field and/or the fifth field is a first value, determining whether to access the target cell based on the indication information and the type of the terminal.

21. A access control method, performed by a network device, comprising:
transmitting indication information to a terminal, the terminal including a first type of terminal or a second type of terminal,
wherein the indication information is used to determine whether to allow the first type of terminal and/or the second type of terminal to access a target cell, and a capability reduction manner of the first type of terminal differs from a capability reduction manner of the second type of terminal.

22. The method according to claim 21, wherein the first type of terminal only supports a reduced peak data rate, and the second type of terminal supports the reduced peak data rate and a baseband bandwidth reduction for data channel.

23. The method according to any one of claims 21 or 22, wherein the indication information comprises: a first field and a second field, or a third field.

24. The method according to claim 23, wherein the indication information comprises: the first field and the second field; and
the first field is used to determine whether to allow the first type of terminal to access the target cell, and the second field is used to determine whether to allow the second type of terminal to access the target cell.

25. The method according to claim 24, wherein in a case where the second field indicates that the second type of terminal is allowed to access the target cell, the first field indicates that the first type of terminal is allowed to access the target cell.

26. The method according to claim 23, wherein the indication information comprises: the first field and the second field; and
the indication information is used to perform at least one of:
in a case where the first field and the second field are both a first value, indicating that the second type of terminal is allowed to access the target cell, or indicating that the first type of terminal and the second type of terminal are allowed to access the target cell;
in a case where the first field is a second value or is not configured, indicating that the first type of terminal and the second type of terminal are not allowed to access the target cell; or
in a case where the first field is a first value and the second field is a second value or is not configured, indicating that the first type of terminal is allowed to access the target cell.

27. The method according to claim 26, wherein in a case where the first field is a second value or is not configured, the second field is not a first value; or in a case where the first field is a second value or is not configured and the second field is a first value, the indication information is used to indicate that all types of terminals are not allowed to access the target cell.

28. The method according to claim 23, wherein the indication information comprises: the first field and the second field;
the first field indicates whether to allow the first type of terminal to access the target cell; and
the second field indicates whether to allow the second type of terminal to access the target cell, and the second field is configured for the second type of terminal to continue reading after the second type of terminal reads the first field and the first field is a first value.

29. The method according to claim 23, wherein the indication information comprises: the third field; and
the indication information is used to perform at least one of:
in a case where the third field is not configured, indicating that the first type of terminal and the second type of terminal are not allowed to access the target cell;
in a case where the third field is a first value, indicating that the second type of terminal is allowed to access the target cell, or indicating that the first type of terminal and the second type of terminal are allowed to access the target cell; or
in a case where the third field is a second value, indicating that the first type of terminal is allowed to access the target cell.

30. The method according to claim 23, wherein the indication information comprises: the third field; and
the indication information is used to perform at least one of:
in a case where the third field is a first value, indicating that the first type of terminal and the second type of terminal are allowed to access the target cell; or
in a case where the third field is a second value or is not configured, indicating that the first type of terminal and the second type of terminal are not allowed to access the target cell.

31. The method according to any one of claims 21 to 30, wherein the indication information is carried by at least one of:
a master information block (MIB);
a system information block 1 (SIB1);
downlink control information (DCI) corresponding to the SIB1;
other system information (other SI); or
DCI corresponding to the other SI.

32. The method according to any one of claims 21 to 31, further comprising:
transmitting an intra frequency reselection indication (IFRI), wherein the IFRI is used to determine whether the terminal performs intra frequency neighbor cell reselection.

33. The method according to claim 32, wherein the first type of terminal and the second type of terminal are indicated by different IFRI.

34. The method according to claim 32 or 33, wherein the terminal has a single receive antenna or dual receive antennas, and the terminal having the single receive antenna and the terminal having the dual receive antennas are indicated by different indication information and/or IFRI.

35. The method according to claim 32 or 33, wherein the terminal is a half-duplex terminal or a full-duplex terminal, and the half-duplex terminal and the full-duplex terminal are indicated by different indication information and/or IFRI.

36. The method according to any one of claims 32 to 35, wherein the indication information and the IFRI are carried by a same or different signaling.

37. The method according to any one of claims 32 to 36, wherein the IFRI is carried by at least one of:
a master information block (MIB);
a system information block 1 (SIB1);
downlink control information (DCI) corresponding to the SIB1;
other system information (other SI); or
DCI corresponding to the other SI.

38. The method according to any one of claims 21 to 37, wherein the terminal is a terminal supporting a publicly released version Rel-18, and the method further comprises:
transmitting a fourth field and/or a fifth field, wherein the fourth field indicates whether to allow a reduced capability (RedCap) terminal supporting Rel-17 to access the target cell, and the fifth field indicates whether to allow a non-RedCap terminal to access the target cell; and in a case where the fourth field and/or the fifth field is a first value, it is used to instruct the terminal to determine whether to access the target cell based on the indication information and the type of the terminal.

39. An access control method, performed by an access control system comprising a terminal and a network device, comprising:
transmitting, by the network device, indication information to the terminal; and
receiving, by the terminal, the indication information, and determining whether to access a target cell based on the indication information and a type of the terminal, wherein the terminal comprises a first type of terminal or a second type of terminal, the indication information is used to determine whether to allow the first type of terminal and/or the second type of terminal to access the target cell, and a capability reduction manner of the first type of terminal differs from a capability reduction manner of the second type of terminal.

40. An access control system, comprising:
a terminal configured to perform the method according to any one of claims 1 to 20; and
a network device configured to perform the method according to any one of claims 21 to 38.

41. An access control apparatus, applied to a terminal, comprising:
a processing module configured to receive indication information, wherein the terminal includes a first type of terminal or a second type of terminal, the indication information is used to determine whether to allow the first type of terminal and/or the second type of terminal to access a target cell, and a capability reduction manner of the first type of terminal differs from a capability reduction manner of the second type of terminal; and determine whether to access the target cell based on the indication information and a type of the terminal.

42. An access control apparatus, applied to a network device, comprising:
a processing module configured to transmit indication information to a terminal, wherein the terminal includes a first type of terminal or a second type of terminal, the indication information is used to determine whether to allow the first type of terminal and/or the second type of terminal to access a target cell, and a capability reduction manner of the first type of terminal differs from a capability reduction manner of the second type of terminal.

43. A communication device, comprising: a processor, a memory and an executable program stored in the memory and capable of being run by the processor, wherein the processor runs the executable program to perform the method according to any one of claims 1 to 20 or 21 to 38.

44. A computer storage medium storing an executable program, wherein a processor executes the executable program to implement the method according to any one of claims 1 to 20 or 21 to 38.
